# EUROPEAN PATENT APPLICATION

(11) **EP 3 021 231 A1**
(43) Date of publication of application: **18.05.2016**
(21) Application number: 14823565.8
(22) Date of filing: 09.07.2014
(51) Int. Cl.: G06F 17/30, G06F 15/16

(54) **METHOD FOR PROVIDING SIGN IMAGE SEARCH SERVICE AND SIGN IMAGE SEARCH SERVER USED FOR SAME**

(30) Priority: 09.07.2013 KR 20130080576
(71) Applicant: Ryu, Jungha, Gyeonggi-do 461-708 (KR)
(72) Inventor: Ryu, Jungha, Gyeonggi-do 461-708 (KR)
(74) Representative: ABG Patentes, S.L.
(86) International application number: PCT/KR2014/006173
(87) International publication number: WO 2015/005681

(57) **Abstract**

Disclosed are a method for providing a sign image search service and a sign image search server used for the same. The present invention is realized through the steps of: by the sign image search server, mapping and storing a sign image and character information corresponding to the sign image; receiving, from a user terminal, an image search request including the character information; searching the character information included in the image search request and the sign image which has been mapped and stored; and transmitting, to the user terminal, the sign image which has been searched. According to the present invention, provided is the method for providing the sign image search service and the sign image search server used for the same capable of enabling users to freely search for and utilize sign images.

## Description

### [Technical Field]

The present invention relates to a method for providing a sign image search service and a sign image search server used for the same, and more particularly, to a method for providing a sign image search service capable of enabling users to freely search for and utilize sign images on the Internet, and a sign image search server used for the same.

### [Background Art]

In modern times, as image media are developed, an importance of transferring information on an image in addition to characters has been increased. For example, with regard to hunger relating to refugee relief, it is more appealing when an image is combined with characters or numerals, rather than a tedious letter written with only characters and numerals. Therefore, to reflect such periodic characteristics, it is necessary to consider a method for taking a language from being used as a simple information transfer media to the next level to symbolically signify the meaning of the language and increase industrial application. In response to such needs, a symbolic character has been devised.

The symbolic character is a new-concept character which is formed by placing a symbol for symbolizing a shape of an empty space at a position corresponding to that of the empty space of the character. Although the symbolic character has lower legibility, however, it may more symbolically represent characters with various graphical expressions by using the empty spaces, while maintaining a character's intrinsic property of transferring its meanings.

In particular, the symbolic character which is formed by symbolizing the shape of the empty space at a position corresponding to that of the empty space of the character may be used as an excellent creation tool capable of expressing ideas and a sense of beauty possessed by people and may be widely used in an industrial design field, due to simpleness and formativeness included in the symbolic character.

Meanwhile, for describing a principle and characteristics of the symbolic character, using signs which are basic elements of design such as a triangle, quadrangle, and circle is the clearest and common way to form the symbolic character. Such a symbolic character is recognized as expressing an original character as a sign, thus is also referred to as a sign image or dot image.

However, a term which may most clearly represent the intention of the invention is a symbolic character. The reason is that the symbolic character is devised as a means for graphically representing a symbolic value of the human mind such as royalty, filial piety, an article of faith, love, will, goal, inspiration, hope, patience, and philosophy in a more elegant way, while the general characters are used for recording and transferring information.

However, since most embodiments are suggested by signs corresponding to a basic element of the symbolic character for technical and clear explanation in the present disclosure, the symbolic character will be described by using the term a "sign image" instead of the term "symbolic character."

Therefore, it is acknowledged that a method for providing a sign image information search service capable of enabling users to freely search for and utilize information on sign images generated by sign image creation activity on the Internet, and a sign image information search server used for the same are required.

### [Disclosure]

### [Technical Problem]

Accordingly, it is an object of the present invention to provide a method for providing a sign image search service capable of enabling users to freely search for and utilize characters, images, and moving image information including sign images on the Internet, and a sign image search server used for the same.

### [Technical Solution]

According to an aspect of the present invention,
there is a provided method
for providing a sign image
search service, including: (a) mapping and storing, by a sign image search server, a sign image and character information corresponding to the sign image; (b) receiving, by the sign image search server, an image search request including character information from a user terminal; (c) searching for, by the sign image search server, the sign image which is mapped to the character information included in the image search request and stored; and (d) transmitting, by the sign image search server, the searched for sign image to the user terminal, wherein the sign image is formed at a position corresponding to that of an empty space in a character image.

In addition, the method may further include: before the step (a), extracting, by the sign image search server, the character information corresponding to the sign image input from an outside.

Meanwhile, according to another aspect of the present invention, there is a provided method for providing a sign image search service, including: (a) storing, by a sign image search server, a plurality of sign images; (b) receiving, by the sign image search server, an image search request including character information from a user terminal; (c) searching for, by the sign image search server, a sign image corresponding to the character information included in the image search request; and (d) transmitting, by the sign image search server, the searched for sign image to the user terminal, wherein the sign image is formed at a position corresponding to that of an empty space in a character image.

Preferably, the character includes at least one of a Korean character, an English letter, and numerals.

Further, according to another aspect of the present invention, there is provided a sign image search server, including: a storage unit configured to map and store a sign image input from an outside, and character information corresponding to the sign image; a receiving unit configured to receive an image search request including character information from a user terminal; a searching unit configured to search for the sign image which is mapped to the character information included in the image search request and stored; and a transmitting unit configured to transmit the searched for sign image to the user terminal, wherein the sign image is formed at a position corresponding to that of an empty space in a character image.

Preferably, the character includes at least one of a Korean character, an English letter, and numerals.

In addition, the sign image search server may further include: an analyzing unit configured to extract the character information corresponding to the sign image input from the outside.

Further, according to another aspect of the present invention, there is provided a sign image search server, including: a storage unit configured to store a plurality of sign images; a receiving unit configured to receive an image search request including character information from a user terminal; a searching unit configured to search a sign image corresponding to the character information included in the image search request; and a transmitting unit configured to transmit the searched for sign image to the user terminal, wherein the sign image is formed at a position corresponding to that of an empty space in a character image.

Preferably, the character includes at least one of a Korean character, an English letter, and numerals.

Furthermore, according to another aspect of the present invention, there is a provided method for providing a sign image search service, including: (a) storing, by a sign image search server, a plurality of sign images; (b) receiving, by the sign image search server, an image search request including a sign image from a user terminal; (c) searching for, by the sign image search server, a sign image corresponding to the sign image included in the image search request; and (d) transmitting, by the sign image search server, the searched for sign image to the user terminal, wherein the sign image is formed at a position corresponding to that of an empty space in a character image.

Furthermore, according to another aspect of the present invention, there is a provided sign image search server, including: a storage unit configured to store a plurality of sign images; a receiving unit configured to receive an image search request including a sign image from a user terminal; a searching unit configured to search a sign image corresponding to the sign image included in the image search request; and a transmitting unit configured to transmit the searched for sign image by the searching unit to the user terminal, wherein the sign image is formed at a position corresponding to that of an empty space in a character image.

### [Advantageous Effects]

According to the present invention, it is possible to provide the method for providing a sign image search service capable of enabling users to freely search for and utilize characters, programs, images, and moving image information including the sign images on the Internet and the sign image search server used for the same.

### [Description of Drawings]

FIG. 1 is a view illustrating a configuration of a sign image editing apparatus to which the present invention may be applied.
FIGS. 2 and 17 are views illustrating a process of extracting sign images according to an embodiment of the present invention.
FIG. 3 is views illustrating a principle for generating a sign image corresponding to the initial consonants of the Korean alphabet (Hangul) according to the embodiment of the present invention.
FIG. 4 is views illustrating a principle for generating a sign image corresponding to middle vowels of the Korean alphabet according to the embodiment of the present invention.
FIG. 5 is views illustrating a principle for generating a sign image corresponding to final consonants of the Korean alphabet according to the embodiment of the present invention.
FIG. 6 is views describing a principle for generating a sign image by transforming according to the embodiment of the present invention.
FIG. 7 is views describing areas in which sign images for the initial consonants, middle vowels, and final consonants of the Korean alphabet are formed, respectively, according to the embodiment of the present invention.
FIG. 8 is views illustrating a principle for generating a sign image corresponding to Arabic numerals according to the embodiment of the present invention.
FIG. 9 is a view illustrating a clock design utilizing numerals expressed by a space division and a symbol according to the embodiment of the present invention.

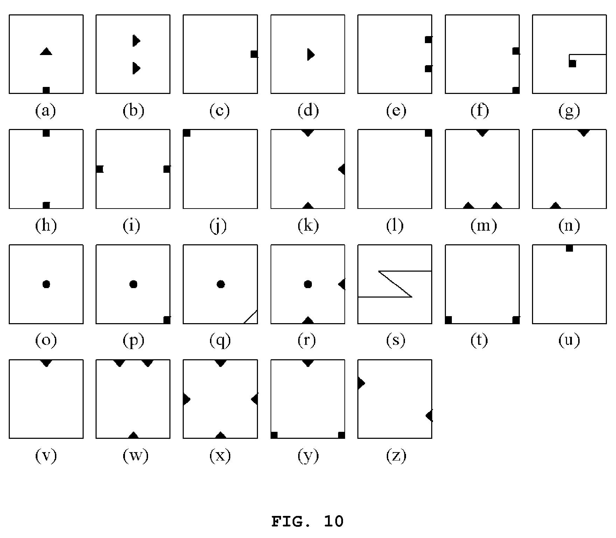

FIG. 10 is views illustrating a principle for generating a sign image corresponding to English capital letters according to the embodiment of the present invention.
FIG. 11 is a configuration view of a sign image search system according to the present invention.
FIG. 12 is a functional block diagram illustrating a structure of a sign image search server used for the sign image search system according to the present invention.
FIG. 13 is a flow chart describing an execution process of a method for searching a sign image according to an embodiment of the present invention.
FIG. 14 is a flow chart describing an execution process of a method for searching a sign image according to another embodiment of the present invention.
FIG. 15 is views illustrating examples in which characters are overlapped according to the embodiment of the present invention.
FIG. 16 is views illustrating an example in which the overlapped characters are searched according to the embodiment of the present invention.
FIGS. 18 and 19 are views illustrating a design target designed according to a design method using sign images according to the present invention.

### [Best Mode]

Hereinafter, the present invention will be described in more detail with reference to accompanying drawings. In the drawings, same reference numerals denote same components throughout the disclosure. Known functions and configurations which may unnecessarily obscure the gist of the present invention will not be described.

In the present invention, a range of "sign image" is expanded to a character including English letters and numerals based on design research for increasing utility of the Korean alphabet, and since the sign images of the Korean alphabet and English alphabet include most common grammatical examples, detailed description will be focused thereon.

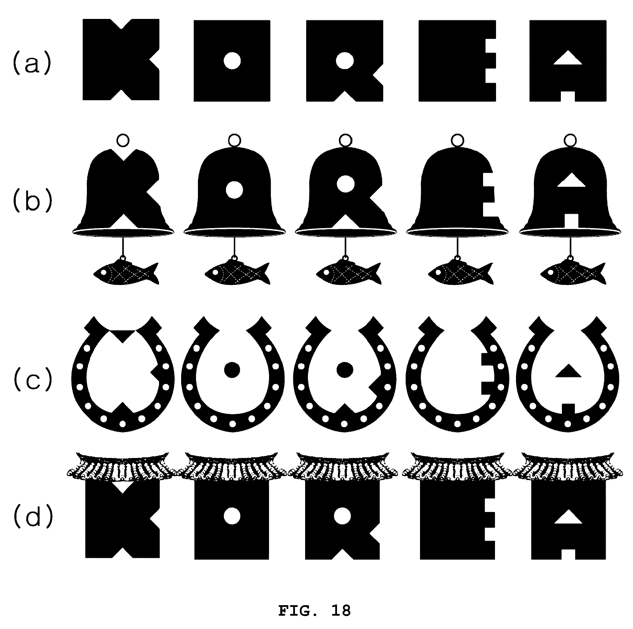

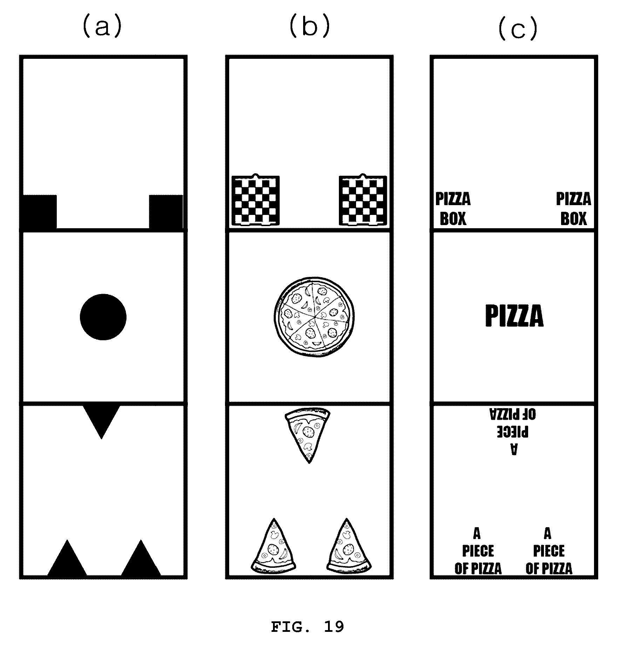

The symbolic character is a character in which at least one symbol is disposed at a portion of a space in a predetermined divided space. Herein, the symbol is a symbol which is formed by simplifying a shape to a dot, a line, a plane, etc., the shape being defined from an empty space of a character in a predetermined frame. In this case, the dot may have various shapes in addition to a shape of basic figures such as a triangle, quadrangle, circle, or the like. For a most basic and grammatical description, the quadrangular frame and figures such as a triangle, quadrangle, and circle as small as a dot are used. The shape of the space may be freely deformed as in FIG. 18, and images or characters reminiscent of a shape of an empty space may also be used as a symbol as in FIG. 19.

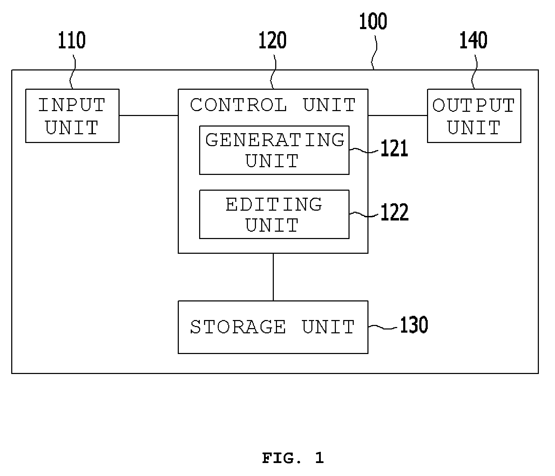

FIG. 1 is a view illustrating a configuration of a sign image editing apparatus to which the present invention may be applied. Referring to FIG. 1, the sign image editing apparatus 100 includes an input unit 110, a control unit 120, a storage unit 130, and an output unit 140. The sign image editing apparatus 100 according to the present invention may be self-operable (see embodiment 1 below), or may also be provided in a communication terminal to communicate with another external apparatus (which is the same apparatus as the sign image editing apparatus 100 of the present invention, provided in or interacting with other communication terminal) through a data communication network (see second and third embodiments below). As the data communication network, a wired/wireless telephone network, Internet, Bluetooth, or the like may be used. As the communication terminal, communication devices capable of wired/wireless data communication such as a wired/wireless telephone, an SIP terminal, a mobile phone, a PDA, a general PC, a handheld PC, a laptop PC with a wired/wireless modem, a smart glasses, a smart camera, a smart watch, a black box, a navigation device, a video recording device, or the like, may be used.

In a first embodiment, the sign image editing apparatus 100 converts a character input through the input unit 110 to a sign image and outputs the sign image through the output unit 140 in real time. Further, the sign image editing apparatus 100 interprets the sign image input through the input unit 110, and outputs the character (including numerals) of the corresponding language through the output unit 140 in real time. That is, in the first embodiment, both of input and output processes are performed in the sign image editing apparatus 100.

In a second embodiment, the sign image editing apparatus 100 transfers the character information input through the input unit 100 to another external apparatus. Further, the sign image editing apparatus 100 interprets the sign image input through the input unit 110, and transfers the character (including numerals) of the corresponding language to the other external apparatus. That is, in the second embodiment, the input process is performed in the sign image editing apparatus 100, and the output process is performed through the other external apparatus.

In a third embodiment, the sign image editing apparatus 100 converts a character transferred from another external apparatus to a sign image and outputs the sign image through the output unit 140 in real time. Herein, the other external apparatus transfers the character information input through the input unit 110 to the sign image editing apparatus 100, or interprets the sign image input through the input unit 110 and transfers the character (including numerals) information of the corresponding language to the sign image editing apparatus 100. That is, in the third embodiment, the input process is performed through the other external apparatus, and the output process is performed in the sign image editing apparatus 100.

Meanwhile, in practicing the present invention, in a fourth embodiment, the input process is performed through the other external apparatus, and the output process may not be performed in the sign image editing apparatus 100, but may be performed through another external apparatus.

In the second and third embodiments, the other external apparatus which is the same apparatus as the sign image editing apparatus 100 of the present invention, is provided in another communication terminal or is driven in association with the other communication terminal, and communicates with the sign image editing apparatus 100 of the present invention through a data communication network.

The sign image is generated on a position corresponding to that of an empty space in a character or numeral image, and its shape is determined depending on a shape of the empty space in the corresponding character or numeral image.

In particular, a sign image corresponding to Korean characters is an image symbolically expressing the Korean characters, and is formed so that a symbol is placed in a portion of the predetermined divided space representing at least one Korean character, and divided to distinguish initial consonants, middle vowels, and final consonants of the Korean characters. In addition, a sign image corresponding to English letters or numerals is an image symbolically expressing the English letters or numerals, and is formed so that a symbol is placed in a portion of a space in the predetermined divided space expressing at least one English letter or numeral.

The input and output processes of another external apparatus in the second and third embodiments are the same as those of the sign image editing apparatus 100 in the first embodiment, and thus, hereinafter, the first embodiment will be mainly described.

The control unit 120 serves to convert the character information input from the input unit 110 according to the first embodiment, or transferred from the other external apparatus according to the third embodiment to the sign image and display or print the sign image through the output unit 140. The control unit 120 includes a generating unit 121 and an editing unit 122.

According to an embodiment, the generating unit 121 generates the sign image at a position corresponding to that of an empty space in the character/numeral images corresponding to the character or numeral information of the language input through the input unit 110, and displays the sign image on a display screen of the output unit 140 or prints the sign image. The generated sign image is stored in the storage unit 130.

Further, in practicing the present invention, in a state that each of the sign images which are generated for the characters/numerals according to a principle for generating a sign image described below is mapped to each of the characters/numerals and stored in the storage unit 130, the generating unit 121 may extract the sign image mapped to the character/numeral input by a user and stored in the storage unit 130 in real time, and display the sign image on the display screen of the output unit 140 or print the sign image.

In another embodiment, the generating unit 121 interprets the sign image input through the input unit 110, extracts the character/numeral mapped to the sign image input by the user and stored in the storage unit 130 in real time, and outputs the character/numeral of the corresponding language through the output unit 140.

The editing unit 122 serves to edit the sign image displayed on the display screen of the output unit 140 according to an editing command when the editing command for adjusting a size or a position of the sign image is input by the user through the input unit 110 (an image editing function in the output process). Further, the editing unit 122 may freely edit the predetermined divided space (e.g. a quadrangular image frame) which is divided to express the sign image, and a space division that divides the predetermined divided space, or edit a type, size, color, shape, position, or transparency of the sign to newly configure the sign (a space editing function in the input/output processes).

In an embodiment, the input unit 110 is used to input the character or numeral information of the language which is desired to be output (displayed, printed, or the like) as the sign image by the user, and to input the edit command for the generated sign image by the user.

In another embodiment, the input unit 110 is used to input the sign image which is desired to be output (displayed, transmitted, printed, or the like) as the character or numeral of the language by the user, and to input the editing command for freely editing the space division of the sign image input by the user or editing the type, size, color, shape, position, or transparency of the sign.

In another embodiment, the input unit 110 is used to input the editing command for the predetermined divided space (e.g. the quadrangular image frame) which is divided to express the sign image desired by the user, and the space division that divides the predetermined divided space (e.g. a space division for distinguishing initial consonants, middle vowels, and final consonants of the Korean characters).

The input unit 110 may include a keypad, touch screen unit, mouse pad, mouse, optical pen, or the like. It is possible to input the characters/numerals which are input in the touch screen unit, using the keypad, and it is also possible to input the characters/numerals which are input in the keypad, using the touch screen unit with a graphic user interface (GUI). The present invention may be applied to an apparatus including only the keypad, an apparatus including only the touch screen unit, or an apparatus including both of the keypad and the touch screen unit.

The keypad includes a plurality of key buttons for inputting numerals, special characters, or characters. In addition, the keypad further includes function buttons for storing, correcting, and loading the input characters/numerals and general buttons, and serves as a medium for transmitting an instruction of the user to the control unit 120. The keypad generates a data required to recognize characters/numerals when the user applies a predetermined pressure on character (consonants and vowels)/numeral keys using his/her fingers or the like, that is, key data, and transfers the generated key data to the control unit 120. The control unit 120 confirms character/numeral code data corresponding to the applied key data in the storage unit 130, extracts a sign image mapped to the character/numeral code data, and displays the sign image on the display screen of the output unit 140 or prints the sign image. A configuration of hard keys of the keypad for inputting characters or numerals and a character/numeral recognition and combination method through the key pad may be configured by applying techniques known in the art, and therefore, it will not be described in detail.

Further, the touch screen unit which is an object-oriented character/numeral information input means, generates data required to recognize characters/numerals when the user applies a predetermined pressure on the characters (consonants and vowels)/numerals on an upper surface of a panel using his/her fingers or a pen such as a stylus pen, that is, touch screen data, and transfers the generated touch screen data to the control unit 120. The control unit 120 confirms character/numeral code data corresponding to the applied touch screen data in the storage unit 130, extracts a sign image mapped to the character/numeral code data, and displays the sign image on the display screen of the output unit 140 or prints the sign image. A configuration of soft keys of the touch screen unit for inputting characters or numerals and a character/numeral recognition and combination method through the touch screen may be configured by applying techniques known in the art, and therefore, it will not be described in detail.

The storage unit 130 stores a program for driving functions processed by the control unit 120, a predetermined program for implementing convenience of the user and various basic functions, and the like. For example, the storage unit 130 is implemented as a volatile memory such a random-access memory (RAM), or a non-volatile memory such as a flash memory, and stores a program for generally controlling overall operation of the apparatus and an operation program for processing the data input from the input unit 110, or the like. In particular, the storage unit 130 has character/numeral code data corresponding to the key data or touch screen data input and processed by implementing the present invention, and the sign image is mapped to the character/numeral code data. The sign image mapped to the character/numeral code data will be described below.

The output unit 140 performs a display or printing operation under a control of the control unit 120. In an embodiment, sign image information output to the output unit 140 is information corresponding to character/numeral information input through the input unit 110. That is, when the user inputs characters/numerals, the character/numeral code data corresponding thereto are extracted, and sign images mapped to the character/numeral code data are output to be displayed on the display screen of the output unit 140 or printed. In another embodiment, the character/numeral information output to the output unit 140 is information corresponding to the sign image information input through the input unit 110. That is, when the user inputs sign images, the character/numeral code data corresponding thereto are extracted by interpreting the sign images, and the sign images mapped thereto are output to be displayed on the display screen of the output unit 140 or printed.

For example, in a Korean character input mode, it is sufficient for expression that the number of initial consonants of the Korean alphabet is a total of 19, thus it is enough that the initial consonants consist of 14 singleton consonants ( 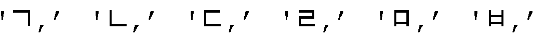 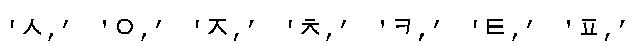 and 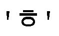 ) and 5 geminate consonants ( 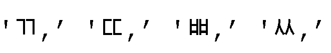 and 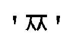 ). Also, it is sufficient for expression that the number of middle vowels is a total of 21, and thus, it is enough that the middle vowels consist of 10 singleton vowels ( 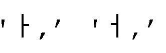 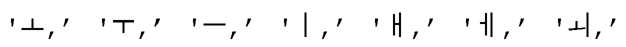 and 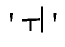 ) and 11 geminate vowels ( 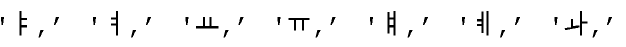 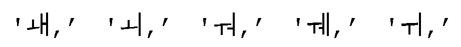 and 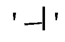 ). Further, it is sufficient for expression that the number of final consonants is a total of 27, and thus, it is enough that the final consonants consist of 14 singleton consonants, 2 geminate consonants, and 11 compound consonants ( 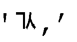 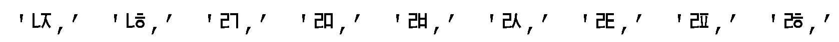 and 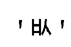 ).

As such, the sign image editing apparatus 100 interprets the characters as the sign images or interprets the sign images to be output as the characters (including numerals) of the corresponding language. As described above, the sign image corresponding to the Korean character which symbolically expresses the character, is a symbol in which at least one symbol is placed at a portion of the space in the predetermined divided space (e.g. the quadrangular image frame) which is divided (space division) to express at least one Korean character (at least one syllable). The symbol is formed by simplifying a shape to a dot, a line, a plane, etc., the shape being defined from an empty space of a character in a predetermined frame, and in this case, the dot may have various shapes such as a triangle, quadrangle, circle, or the like.

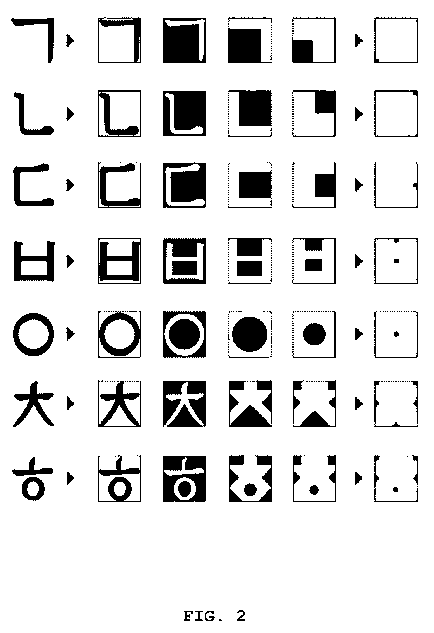

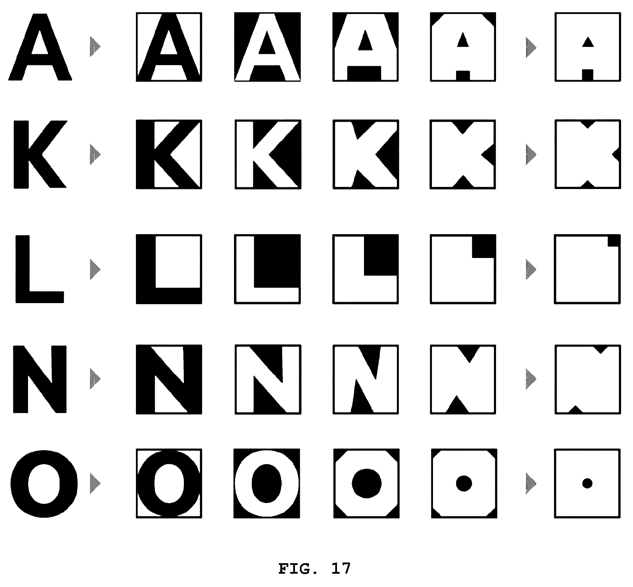

The sign image symbolizing the character is based on a character/numeral processing technique for simply and symbolically expressing the characters with a frame in which the character is defined not as a flat object that is used to be printed, or the like, but as an object having volume and mass and the character is put in the predetermined frame and processed as if a casting obtained by pouring molten metal into an empty space is processed. FIG. 2 (in the case of the Korean alphabet) and FIG. 17 (in the case of the English alphabet) illustrate the processing procedure of the character or numeral in two-dimensions. That is, by adding a spatial concept to the characters, the character is expressed as a simplified space, and the characters of language are processed to extract symbols such as a triangle, quadrangle, circle, or the like which may simplify the characters, and then the symbols are placed at the space to symbolically express the character.

Accordingly, the sign image of the Korean character displayed on the display screen of the output unit 140 is expressed as a first space for expressing at least one Korean character (at least one syllable), the space division that divides the first space by a dot, a line, a plane, or other expressions (space division for dividing the first space into second spaces) and enables the Korean character to be symbolically expressed by performing a function of any one of initial consonants, middle vowels, and final consonants in the divided second spaces, and a symbol of the triangle, quadrangle, circle, and straight line that is placed in the second spaces divided by the space division. Herein, each of the second spaces divided by the space division may include in a transverse direction or a longitudinal direction or a combination thereof, and each of the first spaces may be disposed to be spaced apart in the transverse direction or the longitudinal direction. The symbol may be at least one of an object having a shape of a figure such as a triangle, quadrangle, or circle, an object configured to have such the shapes, an image of the object, and a character reminiscent of each figure.

As an embodiment, a principle for generating a sign image for the Korean alphabet will be described as follows.

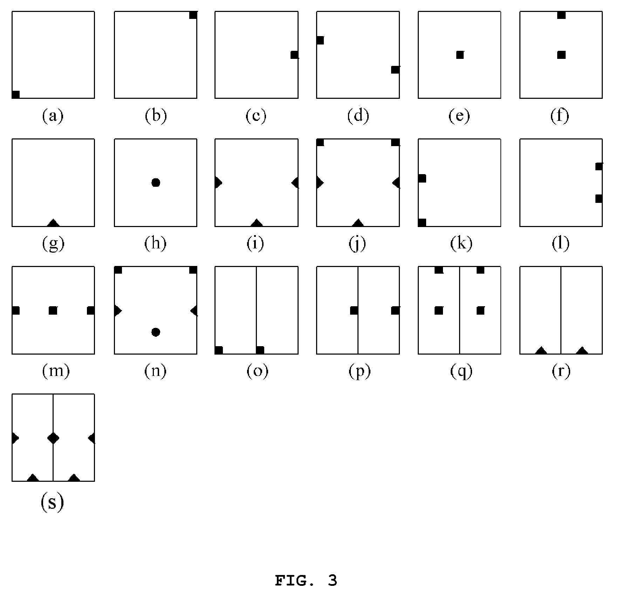

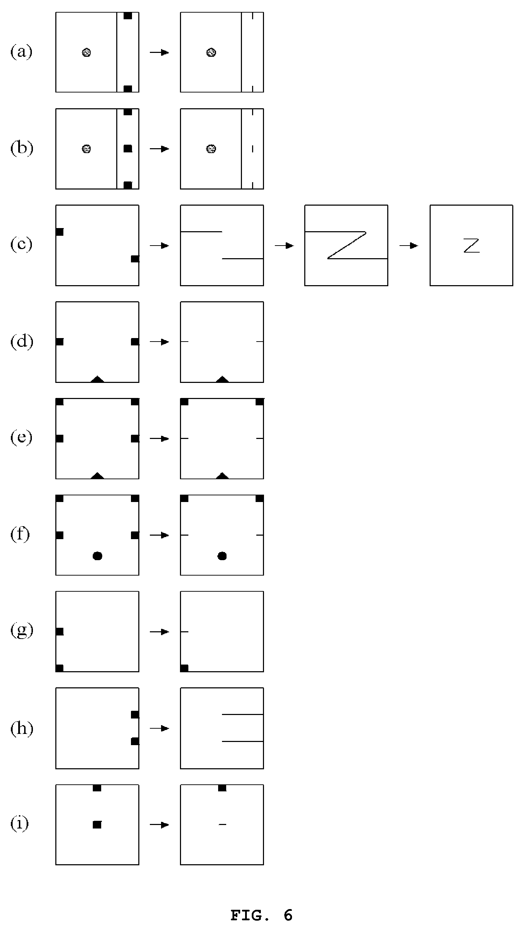

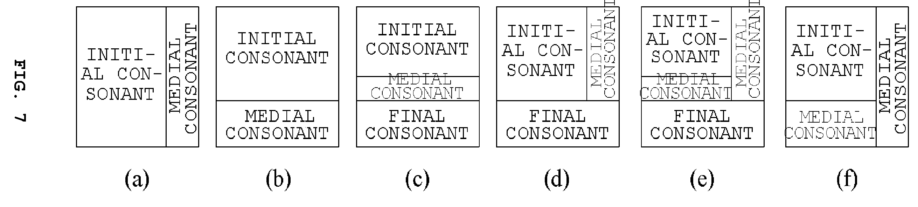

FIGS. 3 to 5 are views illustrating a principle for generating the sign image corresponding to the Korean alphabet according to an embodiment of the present invention, FIG. 6 is views illustrating initial consonants, middle vowels, and final consonants utilizing a dot, a line, and a plane together, and FIG. 7 is views illustrating initial consonants, middle vowels, and final consonants of Korean characters by a space division. As described above, the space division means, for example, a space division for classifying the initial consonants, middle vowels, and final consonants of the Korean characters.

First, FIG. 3 describes a principle for generating a sign image corresponding to the initial consonants of the Korean alphabet. Specifically, in FIG. 3, (a) is an image in which a quadrangular sign image is generated at a lower left corner corresponding to a position of the empty space in ' 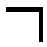 ,' (b) is an image in which a quadrangular sign image is generated at an upper right corner corresponding to a position of the empty space in ' 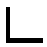 ,' and (c) is an image in which a quadrangular sign image is generated at a middle right side corresponding to a position of the empty space in ' 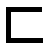 '.

Further, (d) is an image in which quadrangular sign images having the same shapes as those of empty spaces are generated at positions of the empty spaces in ' 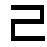 ,' and (e) is an image in which a quadrangular sign image having the same shape as that of an empty space is generated at a center corresponding to a position of the empty space in ' 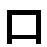 '. Further, (f) is an image in which quadrangular sign images having the same shapes as those of empty spaces are generated at the center and a middle upper side corresponding to positions of the empty spaces in ' 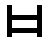 ,' (g) is an image in which a triangular sign image having the same shape as that of an empty space is generated at a middle lower side corresponding to a position of the empty space in ' 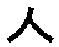 ,' and (h) is an image in which a circular sign image having the same shape as that of an empty space is generated at the center corresponding to a position of the empty space in ' 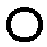 '.

For reference, in symbolizing shapes of empty spaces and placing symbols corresponding thereto, there is no need to place the signs in all empty spaces, but if original characteristics of characters may be clearly symbolized with the minimum number of symbols, then signs corresponding to some of empty spaces may be omitted.

When analyzing the remaining sign images of (i) to (s) in FIG. 3 in accordance with the rule described above, it may be appreciated that (i) is a sign image corresponding to ' 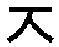 ,' (j) is a sign image corresponding to ' 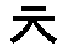 ,' (k) is a sign image corresponding to ' 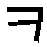 ,' (1) is a sign image corresponding to ' 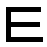 ,' (m) is a sign image corresponding to ' 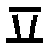 ,' (n) is a sign image corresponding to ' 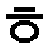 ,' (o) is a sign image corresponding to ' 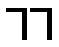 ,' (p) is a sign image corresponding to ' 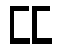 ,' (q) is a sign image corresponding to ' 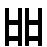 ,' (r) is a sign image corresponding to ' 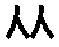 ,' and (s) is a sign image corresponding to ' 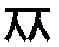 '.

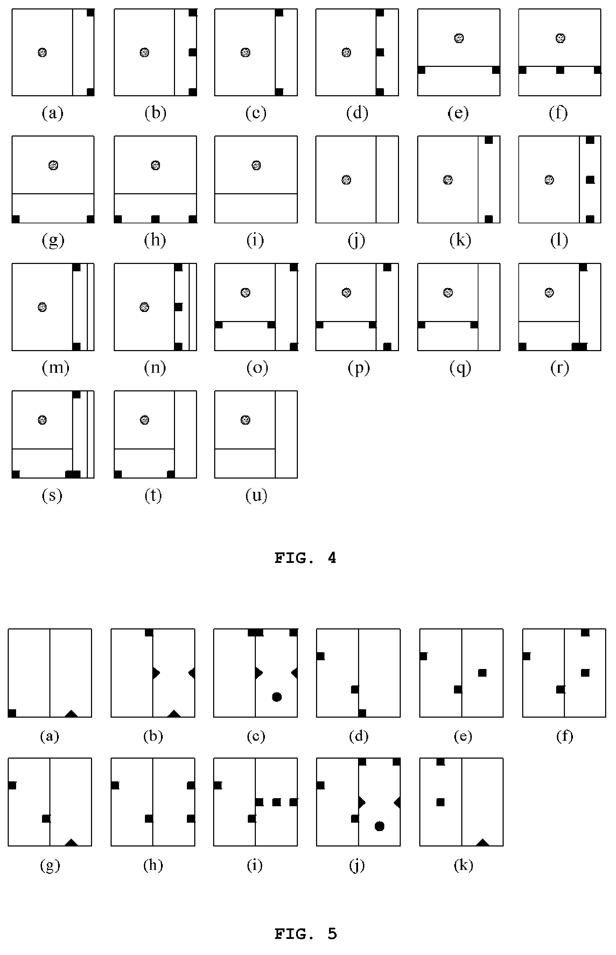

Meanwhile, FIG. 4 describes a principle for generating a sign image corresponding to characters in which the initial consonant and the middle vowel of the Korean alphabet are combined. However, for easy recognition, the vowels are not expressed alone, but are expressed together with the consonant ' 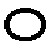 '. To generate a sign image corresponding to the character in which the initial consonant and the middle vowel are combined as illustrated in FIG. 4, first, the quadrangular image frame in FIG. 3 is divided into an initial consonant area, and a middle vowel area as illustrated in (a) and (b) of FIG. 7 (herein, referred to as the 'space division'), and the sign images corresponding to the initial consonant and the middle vowel are generated in the initial consonant area and the middle vowel area, independently from each other.

A principle for generating a sign image corresponding to the initial consonants in an initial consonant image frame is the same as that described in FIG. 3. Also, in the present invention, a sign image corresponding to middle vowels is generated in a middle vowel image frame in such a manner that a quadrangular sign image having the same shape as that of an empty space is generated at a position corresponding to that of the empty space in the middle vowel image.

When analyzing the character expressed by each sign image in FIG. 4 in accordance with the principle for generating the sign image, it may be appreciated that (a) is a sign image corresponding to ' 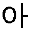 ,' (b) is a sign image corresponding to ' 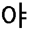 ,' (c) is a sign image corresponding to 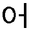 '┤,' (d) is a sign image corresponding to ' 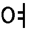 ,' (e) is a sign image corresponding to ' 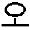 ,' (f) is a sign image corresponding to ' 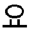 ,' (g) is a sign image corresponding to ' 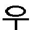 ,' (h) is a sign image corresponding to ' 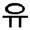 ,' (i) is a sign image corresponding to ' 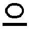 ,' (j) is a sign image corresponding to ' 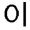 ,' (k) is a sign image corresponding to ' 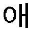 ,' and (1) is a sign image corresponding to ' 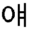 '.

Meanwhile, in a case of a monophthong ' 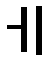 ' and a diphthong ' 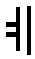 ' among the middle vowels, in order to separate them from ' 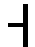 ' and ' 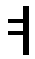 ,' respectively, it is preferable that the middle vowel image frame is divided into two areas in the longitudinal direction so that ' 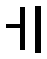 ' is written in ' 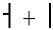 ' and ' 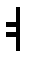 ' is written in ' 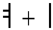 ,' as illustrated in (m) and (n) of FIG. 4. Accordingly, (m) is a sign image corresponding to ' 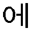 ,' and (n) is a sign image corresponding to ' 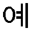 '.

Meanwhile, in a case of complex vowels among the vowels, it is preferable that the sign image of each vowel is separately generated in a state in which the middle vowel image frame is divided into a lower portion and a right portion of the whole quadrangular image frame. Accordingly, (o) is a sign image corresponding to ' 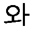 ,' (p) is a sign image corresponding to ' 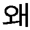 ,' (q) is a sign image corresponding to ' 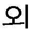 ,' (r) is a sign image corresponding to ' 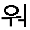 ,' (s) is a sign image corresponding to ' 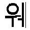 ,' (t) is a sign image corresponding to ' 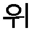 ,' and (u) is a sign image corresponding to ' 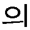 '.

Meanwhile, in generating a sign image corresponding to the character in which the initial consonant, the middle vowel, and the final consonant are combined, first, the quadrangular image frame in FIG. 3 is divided into the initial consonant area, the middle vowel area, and a final consonant area as illustrated in (c) to (f) of FIG. 7 (herein, refers to as the 'space division'), and the sign images corresponding to the initial consonant, the middle vowel, and the final consonant are generated in the initial consonant area, the middle vowel area, and the final consonant area, independently from each other.

FIG. 5 describes a principle for generating a sign image corresponding to the final consonants of the Korean alphabet in a final consonant image frame. Meanwhile, all of the 14 singleton consonants (' 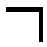 ,' ' 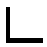 ,' ' 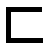 ,' ' 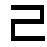 ,' ' 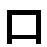 ,' ' 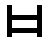 ,' ' 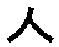 ,' ' 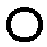 ,' ' 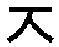 ,' ' 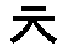 ,' 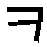 ',' 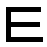 ' 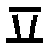 ,' ' 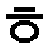 ,' and ' 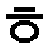 ') and 2 geminate consonants (' 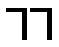 ,' and ' 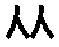 ') in (a) to (s) of FIG. 3 of the initial consonants of the Korean alphabet may be used as the final consonants of the Korean alphabet, thus an overlapped description therefore will be omitted. In FIG. 5, a principle for generating sign images corresponding to 11 compound consonants used as only the final consonants (' 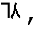 ,' ' 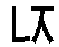 ,' ' 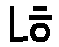 ,' ' 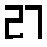 ,' ' 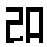 ,' ' 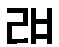 ,' ' 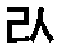 ,' ' 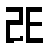 ,' ' 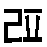 ,' ' 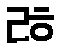 ,' ' 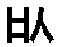 ') of the Korean alphabet will be described.

In the case of the compound consonants used as only the final consonants of the Korean alphabet, similarly to the case of other geminate consonants of the Korean alphabet, the final consonant image frame is divided into two areas so that the sign image corresponding to each consonant is generated in the separated two image frames, respectively.

Accordingly, in FIG. 5, (a) is a sign image corresponding to ' 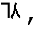 ' (b) is a sign image corresponding to ' 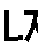 ,' (c) is a sign image corresponding to ' 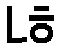 ,' (d) is a sign image corresponding to ' 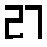 ,' (e) is a sign image corresponding to ' 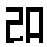 ,' (f) is a sign image corresponding to ' 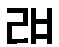 ,' (g) is a sign image corresponding to ' 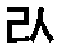 ,' (h) is a sign image corresponding to ' 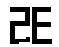 ,' (i) is a sign image corresponding to ' 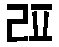 ,' (j) is a sign image corresponding to ' 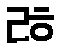 ,' and (k) is a sign image corresponding to ' 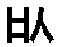 '.

As such, the sign image may be generated according to the principles of FIGS. 3 to 5, and an image with a transformed sign shape as illustrated in FIG. 6 may also be generated.

Specifically, the quadrangular sign which is used to express consonants may be replaced by a short vertical line segment as illustrated in (a) and (b) of FIG. 6, and the quadrangular signs at the left and right sides which are used to express the consonant ' 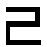 ' among the consonants may be replaced by long horizontal line segments or the long horizontal line segments may be connected to each other with a diagonal line segment to form a 'Z' shape, or the 'Z' shape may also be downsized to have a 'z' shape, as illustrated in (c). Also, the quadrangular sign images at the middle portions of the left and right sides among the signs which are used to express the consonants ' 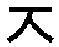 ,' ' 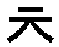 ,' and ' 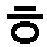 ' may be replaced by a short horizontal line segment, respectively, as illustrated in (d), (e) and (f). Further, only the quadrangular sign at the middle portion of the left side among the signs which are used to express the consonant ' 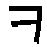 ' may be replaced by a short horizontal line segment as illustrated in (g), the quadrangular signs at the right side which are used to express the consonant ' 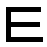 ' may be replaced by a long horizontal line segment, respectively, as illustrated in (h), and only the quadrangular sign at the middle portion among the signs which are used to express the consonant ' 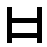 ' may be replaced by a short line segment as illustrated in (i).

Referring to again FIG. 1, as an embodiment, the generating unit 121 generates the sign image at a position corresponding to that of an empty space in the character image corresponding to the Korean character input through the input unit 110, that is, generates the sign images corresponding to the initial consonant and the middle vowel independently from each other, in the initial consonant image frame and the middle vowel image frame by dividing the quadrangular image frame into the initial consonant area, and the middle vowel area (space division) as illustrated in (a) to (b) of FIG. 7, or generates the sign images corresponding to the initial consonant, middle vowel, and the final consonant independently from each other, in the initial consonant image frame, the middle vowel image frame, and the final consonant image frame by dividing the quadrangular image frame into the initial consonant area, the middle vowel area, and the final consonant area (space division) as illustrated in (c) to (e) of FIG. 7, thereby displaying the sign images on the display screen of the output unit 140, or printing the sign images.

Further, the generating unit 121 extracts the sign image mapped to the character input by the user and stored in the storage unit 130, such that the sign images corresponding to the initial consonant and the middle vowel independently from each other, in the initial consonant image frame and the middle vowel image frame by dividing the quadrangular image frame into the initial consonant area, and the middle vowel area (space division) as illustrated in (a) and (b) of FIG. 7, or the sign images corresponding to the initial consonant, middle vowel, and the final consonant independently from each other, in the initial consonant image frame, the middle vowel image frame, and the final consonant image frame by dividing the quadrangular image frame into the initial consonant area, the middle vowel area, and the final consonant area (space division) as illustrated in (c) to (e) of FIG. 7, are displayed on the display screen of the output unit 140, transmitted, or printed.

As another embodiment, the user may input the sign image which is desired to be output (displayed, printed, or the like) as the character of the language through the input unit 110. In the case of the character in which the initial consonant and middle vowel of the Korean alphabet are combined, the user selects any one of those in (a) and (b) of FIG. 7, and in the case of the character in which the initial consonant, the middle vowel and the final consonant of the Korean alphabet are combined, the user selects any one of those in (c) to (e) of FIG. 7, and designates a portion to be placed with the symbol. Then, the process proceeds to a step of selecting the shape of the symbol (a dot, a line, a plane, or the like), and when the user selects the 'dot' shape, the process proceeds to a step of selecting the shape of the dot (triangle, quadrangle, circle, or the like). When the symbol is placed at a portion of the space divided by the space division of the predetermined divided space (e.g. the quadrangular image frame) as described above, the generating unit 121 interprets the sign image input through the input unit 110 and extracts the character mapped in the sign image input by the user and stored in the storage unit 130, thereby outputting the character of the corresponding language through the output unit 140 in real time.

As such, the user may input the character information of the language which is desired to be output (displayed, transmitted, printed, or the like) as the sign image through the input unit 110, on the other hand, the user may also input the sign image which is desired to be output (displayed, transmitted, printed, or the like) as the character of the language through the input unit 110.

Meanwhile, in a numeral input mode, it is sufficient for expression that the number of Arabic numerals is a total of 10. That is, the Arabic numbers consist of '0,' '1,' '2,' '3,' '4,' '5,' '6,' '7,' '8,' and '9'.

Sign images for the Arabic numerals may be expressed by placing symbols at a portion of a space in the predetermined divided space (e.g. the quadrangular image frame). However, since the numerals are not divided into initial consonant/middle vowel/final consonant, there is no need to classify the divided space (space division) again. Herein, the symbol is formed by simplifying a shape to a dot, a line, a plane, etc., the shape being defined from an empty space of Arabic numeral in a predetermined frame, and in this case, the dot may have various shapes such as a triangle, quadrangle, circle, or the like.

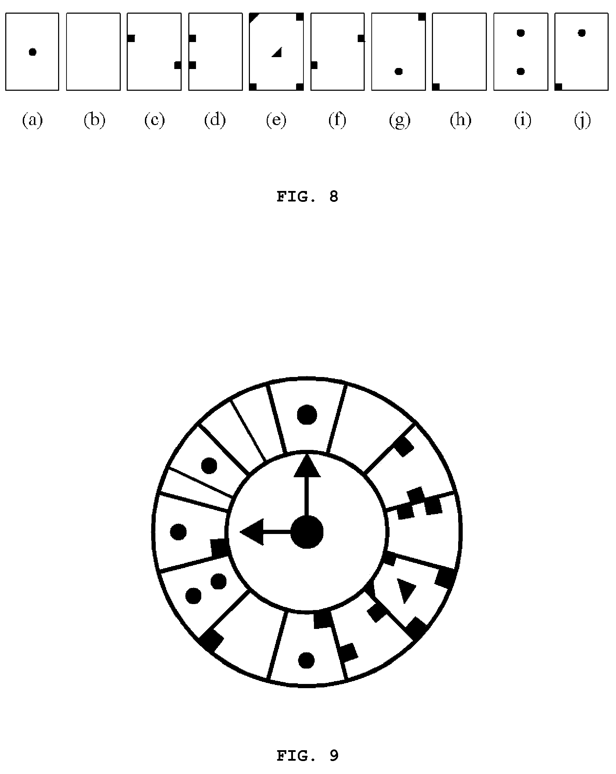

FIG. 8 describes a principle for generating a sign image corresponding to the Arabic numeral in a numeral image frame. In FIG. 8, (a) is a sign image corresponding to the numeral '0,' (b) is a sign image corresponding to the numeral '1,' (c) is a sign image corresponding to the numeral '2,' (d) is a sign image corresponding to the numeral '3,' (e) is a sign image corresponding to the numeral '4,' (f) is a sign image corresponding to the numeral '5,' (g) is a sign image corresponding to the numeral '6,' (h) is a sign image corresponding to the numeral '7,' (i) is a sign image corresponding to the numeral '8,' and (j) is a sign image corresponding to the numeral '9'. As described above, the sign image corresponding to the numerals may express the numerals by the space division and symbols, while being applied to a clock as illustrated in FIG. 9.

Meanwhile, in an English character input mode, it is sufficient for expression that the number of English letters is a total of 52 (26 capital letters and 26 small letters). Among the 26 capital letters (/small letters) of the English alphabet, the remaining 21 except for 5 vowel letters (that is, "A(/a)," "E(/e)," "I(/i)," "O(/o)," and "U(/u)"), are referred to as 'consonant letters'. That is, the capital letters (/small letters) of the English alphabet consist of 21 consonant letters (that is, 'B(/b),' 'C(/c),' 'D(/d),' 'F(/f),' 'G(/g),' 'H(/h),' 'J(/j),' 'K(/k),' 'L(/l),' 'M(/m),' 'N(/n),' 'P(/p),' 'Q(/q),' 'R(/r),' 'S(/s),' 'T(/t),' 'V(/v),' 'W(/w),' 'X(/x),' 'Y(/y),' and 'Z(/z)') and 5 vowel letters (that is, 'A(/a),' 'E(/e),' 'I(/i),' 'O(/o),' and 'U(/u)').

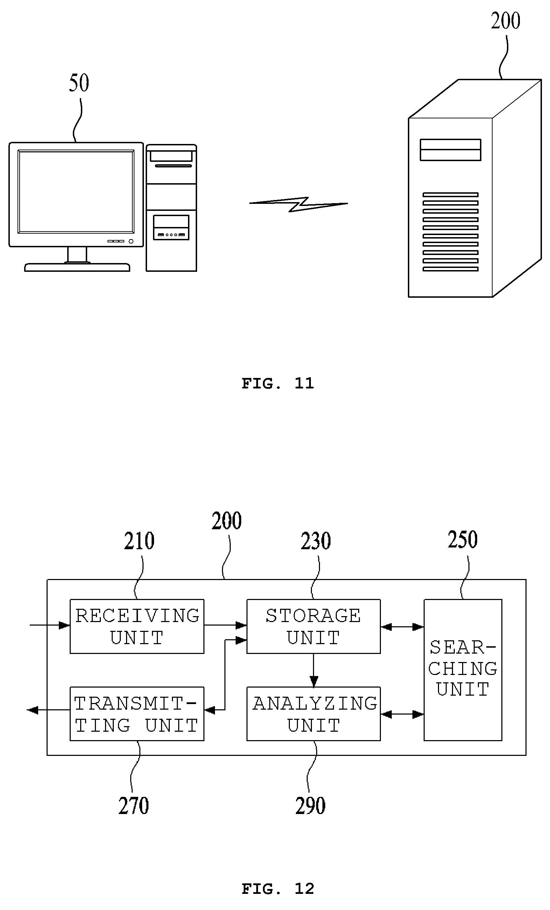

Meanwhile, as described above, it is preferable that the sign images generated by the sign image editing apparatus 100 are provided to a searcher through the sign image search server 200 as the relevant images later if needed by the searcher who searches for sign image information, when the searcher requests for the search through a user terminal 50 as illustrated in FIG. 11.

That is, there is a need to consider a method of searching for and utilizing the sign images generated according to the present invention as necessary, and thus, in the present invention, the sign image search server 200 as illustrated in FIG. 12 is additionally suggested.

Referring to FIG. 12, the sign image search server 200 according to the present invention includes a receiving unit 210, a storage unit 230, a searching unit 250, a transmitting unit 270, and an analyzing unit 290.

First, a plurality of sign images generated by the sign image editing apparatus 100 are stored in the storage unit 230 of the sign image search server 200, and the receiving unit 210 of the sign image search server 200 receives a sign image search request from the user terminal 50.

The searching unit 250 of the sign image search server 200 serves to search for the sign image corresponding to the character information included in the sign image search request received from the user terminal 50, from the plurality of sign images stored in the storage unit 230, and the transmitting unit 270 of the sign image search server 200 transmits the sign image searched for in the searching unit 250 to the user terminal 50.

Meanwhile, the analyzing unit 290 of the sign image search server 200 serves to extract the character information corresponding to the sign images stored in the storage unit 230 so that the extracted character information is stored in the storage unit 230.

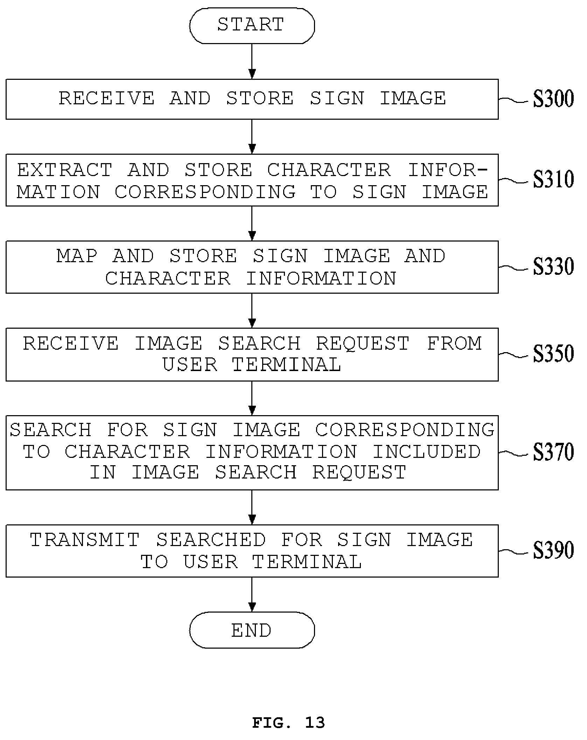

FIG. 13 is a flow chart describing an execution process of a method of searching for a sign image according to an embodiment of the present invention.

Referring to FIGS. 11 to 13, the execution process of the method of searching for a sign image according to the embodiment of the present invention will be described. First, the receiving unit 210 of the sign image search server 200 receives a plurality of pre-generated sign images from the outside, and the plurality of received sign images are stored in the storage unit 230 (S300).

Next, the analyzing unit 290 of the sign image search server 200 extracts at least one character information corresponding to each of the plurality of sign images stored in the storage unit 230, and the extracted character information is stored in the storage unit 230 (S310).

Meanwhile, in the above step S310, in extracting, by the analyzing unit 290 of the sign image search server 200, the character information corresponding to each of the sign images stored in the storage unit 230, the operation in which a sign image is generated from each character in FIG. 2 is reversely applied, thereby extracting the converted characters from the sign images.

Meanwhile, it is preferable that the sign image search server 200 maps each of the sign images stored in the storage unit 230 to the extracted character information through the above step S310, respectively, and stores them in the storage unit 230 (S330).

Then, the user with access to the sign image search server 200 requests for the image search through the user terminal 50, and accordingly, the receiving unit 210 of the sign image search server 200 receives the image search request including the character information from the user terminal 50 (S350).

Specifically, when the user wants to search for the sign image corresponding to ' 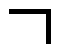 ' as the character information, the user inputs ' 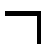 ' through the user terminal 50, and accordingly, the sign image search server 200 receives the image search request including ' 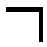 ' as the character information.

The searching unit 250 of the sign image search server 200 searches for the sign images mapped to ' 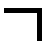 ' included in the received image search request and stored in the storage unit 230 (S370), and the searched for sign images are transmitted to the user terminal 50 through the transmitting unit 270 of the sign image search server 200 (S390).

Accordingly, the user may be provided with the sign images corresponding to ' 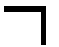 ' through the user terminal 50 from the sign image search server 200, and may perform additional operations such as editing, processing, or the like using the sign images provided as described above.

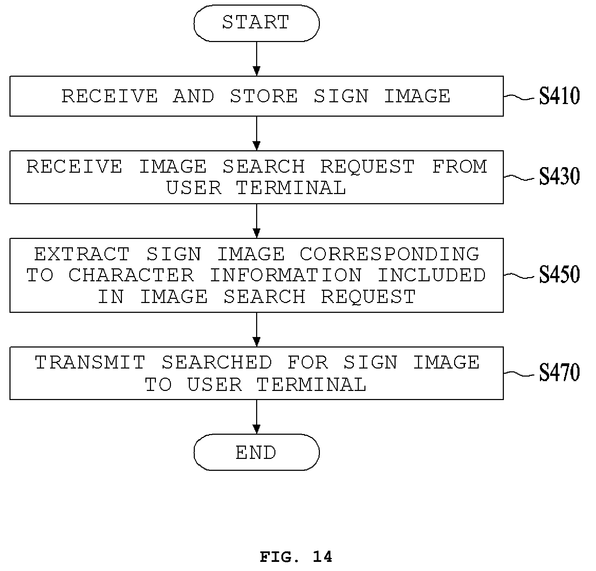

FIG. 14 is a flow chart describing an execution process of a method of searching for a sign image according to another embodiment of the present invention.

Referring to FIGS. 11, 12, and 14, the execution process of the method of searching for a sign image according to another embodiment of the present invention will be described. First, the receiving unit 210 of the sign image search server 200 receives a plurality of pre-generated sign images from the outside, and the plurality of received sign images are stored in the storage unit 230 (S410).

Then, the user with access to the sign image search server 200 requests for the image search through the user terminal 50, and accordingly, the receiving unit 210 of the sign image search server 200 receives the image search request including the character information from the user terminal 50 (S430).

Specifically, when the user wants to search for the sign image corresponding to ' 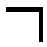 ' as the character information, the user inputs ' 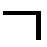 ' through the user terminal 50, and accordingly, the sign image search server 200 receives the image search request including ' 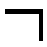 ' as the character information.

Accordingly, the analyzing unit 290 of the sign image search server 200 analyzes the plurality of sign images stored in the storage unit 230, extracts at least one character information corresponding thereto, and stores the extracted character information in the storage unit 230, and the searching unit 250 of the sign image search server 200 searches for the sign images corresponding to ' 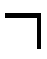 ' which is the character information included in the image search request from the plurality of sign images extracted by the analyzing unit 290 and stored in the storage unit 230 (S450).

Specifically, in executing the above step S450, in extracting, by the analyzing unit 290 of the sign image search server 200, the character information corresponding to each of the sign images stored in the storage unit 230, the operation in which a sign image is generated from each character in FIG. 2 is reversely applied, thereby extracting the converted characters from the sign images.

That is, by the above step S450, the searching unit 250 of the sign image search server 200 extracts the sign images corresponding to ' 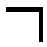 ' which is the character information included in the received image search request, and the searched for sign images are transmitted to the user terminal 50 through the transmitting unit 270 of the sign image search server 200 (S470).

Accordingly, the user may be provided with the sign images corresponding to ' 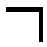 ' through the user terminal 50 from the sign image search server 200, and may perform additional operations such as editing, processing, or the like using the sign images provided as described above.

Meanwhile, in practicing the present invention, when the user transmits the image search request to the sign image search server 200 through the user terminal 50, the sign image directly input through the user terminal 50 may be included in the corresponding request.

The sign image included in the image search request as described above may be the sign image directly input by the user through the user terminal 50, or may also be the sign images included in the image search request as the user reselects the sign image received from the sign image search server 200 in the above step S390 or S470.

That is, the sign image search server 200 which makes the plurality of sign images to be stored in the storage unit 230, receives the image search request including the sign image from the user terminal 50, and the searching unit 250 of the sign image search server 200 searches for the sign image corresponding to the sign image included in the image search request in the storage unit 230, and the transmitting unit 270 of the sign image search server 200 transmits the sign image searched for by the searching unit 250 to the user terminal.

Meanwhile, in searching, by the searching unit 250, the sign image corresponding to the sign image included in the image search request from the storage unit 230, a method of searching for the sign image based on correspondency measured through comparison between the both sign images, a method of searching for the sign image based on whether or not the character information correspond to each other by reading out the character information expressed by the both sign images, a method of searching for the sign image by directly comparing the entire images including the both sign images, or the like may be used.

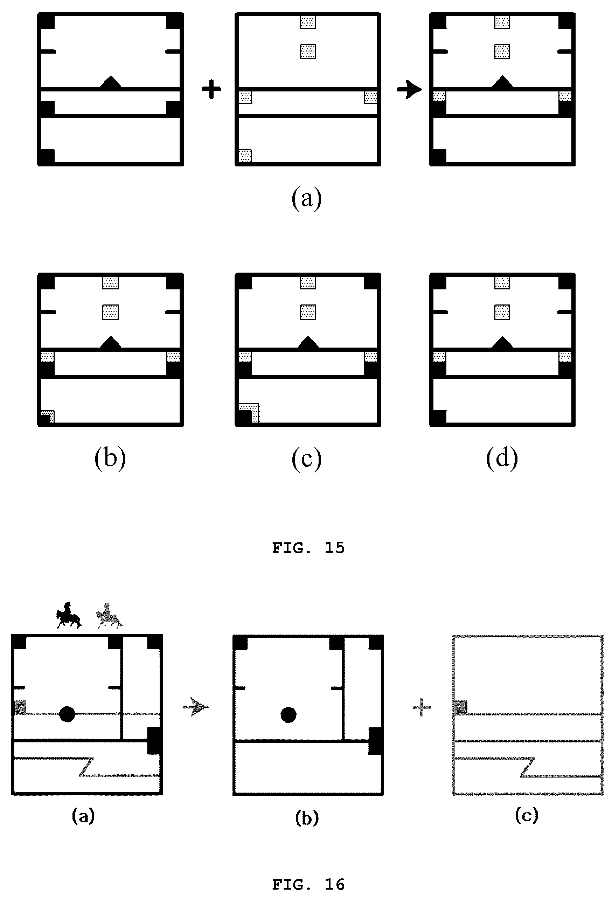

Meanwhile, as the image searched for by the searching unit 250 according to the present invention, various sign images such as a sign image in which a plurality of sign images are overlapped (see FIGS. 15 and 16), a sign image without lines for the space division, a reversed sign image, and the like may be applied.

Meanwhile, in practicing the present invention, it is preferable that the sign images stored in the storage unit 230 are divided and stored depending on a type of the entire images to which the sign image is applied (e.g. chair, building, works of art, or the like), a type of sign images applied to the corresponding image (e.g. sign image for a Korean character, sign image for an English letter, sign image for numerals, or the like), or depending on whether the sign image is an sign image in which the sign image is visually expressed on the real object for the entire images to which the sign image is applied or the sign image is an sign image in which the sign image is non-visually expressed on the real object for the entire images to which the sign image is applied (for example, a case in which the sign images are expressed as temperature distribution, infrared light distribution, ultraviolet light distribution, signal distribution, or the like).

In this case, in transmitting the image search request to the sign image search server 200 through the user terminal 50, the user may allow the classification information in the storage unit 230 as described above to be included in the corresponding image search request, to thereby implement an efficient search through the searching unit 250.

Meanwhile, in practicing the present invention, in the above step S370, the sign image search server 200 may also search for the sign image configured so that a plurality of sign images are overlapped with each other in searching for sign images corresponding to a plurality of character information received from the user. That is, it is also possible to search for the sign images in which different space divisions and different placements of the symbols of a plurality of sign images are overlapped with each other, as illustrated in FIG. 15.

First, a principle for overlapping the plurality of sign images will be described. It is possible to accomplish a complicated placement of symbols and the space division by overlapping 2 sign images (layers 1 and 2) as illustrated in FIG. 15.

Before overlapping the characters, it is necessary for the characters to be marked with symbols different from each other so that the characters may be easily recognized after the characters are overlapped. In this case, the characters may be differentiated by making the colors, shapes, positions, sizes, or transparencies of the symbols different or using characters, marks, or the like. The simplest method is to differentiate by colors.

As in the first image of (a) in FIG. 15, character ' 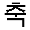 ' has a black color, and as in the second image of (b), the character ' 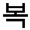 ' has a gray color, and the two sign images are overlapped with each other, thereby being expressed as the third image of (a). Herein, the characters ' 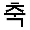 ' and ' 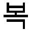 ' have the same final consonant ' 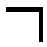 ,' thus in the case in which the shapes and sizes of the figures are the same as each other, the figure (final consonant image) of the second sign image (layer 2) is covered by the figure of the first sign image (layer 1). In this case, the overlapped state may be clearly identified by reducing the size of the figure (final consonant image) of the first sign image (layer 1) (b), or enlarging the size of the second sign image (layer 2) (c) to make the size of the figures of two sign images different from each other.

Further, in the case in which the figure of the second sign image is covered by the figure of the first sign image, and it may be easily inferred, the figure expression of the second sign image may be omitted (d).

Unique characteristics may be given to the two overlapped sign images (layers 1 and 2) to be differentiated, such that the layers may be separated from each other to be recognized as an independent character by the characteristics. In an embodiment, the characteristics given to the layers may include various methods such as 2-dimensional or 3-dimensional space division in addition to color, texture, brightness, chroma, shape, light and shade, and pattern.

For example, as illustrated in FIG. 16, the order of overlapped layers is indicated by marks (identifiers) having the same characteristic as that of the respective layers on the overlapped layers. An object of the identifier is indication of the order and decoration, therefore, the number of the identifiers may be the same as or different from the number of the layers, and the order of the layers may be recognized from the identifier, and the number of layers may be recognized from the number of the types of signs in the overlapped sign characters. The order of the identifiers is determined from 'top' to 'bottom' in the case in which the identifiers are vertically indicated, or from 'left' to 'right' in the case in which the identifiers are horizontally indicated, depending on a method of reading the characters. Therefore, the identifier positioned on the uppermost and left side indicates the first layer.

As an example, an identifier (black identifier) which has at least one of the color, light and shade, brightness, pattern, and texture the same as those of the first sign image (layer 1) generated earlier is indicated at the front as illustrated in a first image (a) of FIG. 16, and an identifier (gray identifier) which has at least one of the color, light and shade, brightness, pattern, and texture the same as those of the second sign image (layer 2) generated earlier is indicated at the back as illustrated in the first image (a) of FIG. 16. In the two sign images (layers 1 and 2) overlapped as illustrated in the first image (a), ' 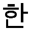 ' is read first as illustrated in a second image (b) of FIG. 16, and ' 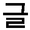 ' is read later as illustrated in a third image (c) of FIG. 16 according to the order of the identifiers, such that the first image (a) which is the overlapped image is read as ' 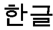 ,' thereby allowing the searching unit 250 to search for the corresponding image.

That is, the sign image search server 200 may also identify the overlapped sign images implemented in a design target through the identifier. In detail, the searching unit 250 may read ' 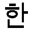 ' first as illustrated in the second image of FIG. 16, and read ' 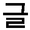 ' later as illustrated in the third image of FIG. 16, in the two sign images (layers 1 and 2) overlapped as illustrated in the first image of FIG. 16 according to the order of the identifiers, thereby reading and searching for the first image which is an overlapped image as 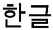 ''.

Meanwhile, in practicing the present invention, when executing the above step S350, in the case in which the user with access to the sign image search server 200 requests for the image search through the user terminal 50, the sign image may be generated through the user terminal 50, and the image search request including the generated sign image may be transmitted to the sign image search server 200.

In this case, the analyzing unit 290 of the sign image search server 200 extracts the character information corresponding to the sign image received from the user terminal 50, and then the above described steps S370 and S390 are executed.

Furthermore, when executing the above step S350, in the case in which the user with access to the sign image search server 200 requests for the image search through the user terminal 50, the image search request including signal information (sign image signal information) indicated by the sign image may also be transmitted to the sign image search server 200.

Specifically, the user terminal 50 includes an input device such as a keyboard, or the like including various sign images as key buttons. In the case in which the user presses the key button of a specific sign image to input the same, the user terminal 50 generates a signal or data corresponding to the sign image indicated in the key button pressed by the user. Then, the user terminal 50 transmits the image search request including the generated sign image signal information to the sign image search server 200.

Meanwhile, the character information corresponding to the respective sign image signal information is mapped and stored in the storage unit of the sign image search server 200. Therefore, the analyzing unit 290 of the sign image search server 200 extracts the character information corresponding to the sign image signal information received from the user terminal, and then the above steps S370 and S390 are executed.

Further, in practicing the present invention, an aesthetic designing apparatus generates sign images corresponding to character information (KOREA) as illustrated in (a) of FIG. 18, and a design target may also be designed so that the sign images generated through the generation process of the sign image are expressed on the cultural images as illustrated in (b), (c) and (d) of FIG. 18.

Further, in practicing the present invention, the aesthetic designing apparatus generates sign images corresponding to character information (TOM) as illustrated in (a) of FIG. 19, and the sign images generated through the generation process of the sign image may also be designed while being transformed as illustrated in (b) and (c) of FIG. 19.

Although preferred embodiments and applications of the present invention have been described above, the present invention should not be construed as being limited to the above described specific embodiments and applications, but may be variously modified and embodied by a person having ordinary skill in the art to which the present invention pertains without departing from the gist of the present invention claimed in the appended claims. Such modifications should not be considered as departing from the technical idea or scope of the present invention.

In addition, terms used herein are for the purpose of describing specific embodiments only, but are not intended to limit the present invention. A singular form includes a plural form unless the context clearly indicates otherwise. Throughout this specification, it will be understood that the term "comprise" and variations thereof, such as "comprising" and "having", specify the presence of features, numbers, steps, operations, components, parts, or combinations thereof, described in the specification, but do not preclude the presence or addition of one or more other features, numbers, steps, operations, components, parts, or combinations thereof.

### [Industrial Applicability]

The present invention is applicable in the design-related industrial field using a computer.

## Claims

1. A method for providing a sign image search service, comprising:
(a) mapping and storing, by a sign image search server, a sign image and character information corresponding to the sign image;
(b) receiving, by the sign image search server, an image search request including character information from a user terminal;
(c) searching for, by the sign image search server, the sign image which is mapped to the character information included in the image search request and stored; and
(d) transmitting, by the sign image search server, the searched for sign image to the user terminal,
wherein the sign image is formed at a position corresponding to that of an empty space in a character image.

2. The method of claim 1, wherein the character includes at least one of a Korean character, an English letter, and numerals.

3. The method of claim 1, further comprising: before the step (a), extracting, by the sign image search server, the character information corresponding to the sign image input from an outside.

4. A method for providing a sign image search service, comprising:
(a) storing, by a sign image search server, a plurality of sign images;
(b) receiving, by the sign image search server, an image search request including character information from a user terminal;
(c) searching for, by the sign image search server, a sign image corresponding to the character information included in the image search request; and
(d) transmitting, by the sign image search server, the searched for sign image to the user terminal,
wherein the sign image is formed at a position corresponding to that of an empty space in a character image.

5. The method of claim 4, wherein the character includes at least one of a Korean character, an English letter, and numerals.

6. A sign image search server, comprising:
a storage unit configured to map and store a sign image input from an outside, and character information corresponding to the sign image;
a receiving unit configured to receive an image search request including character information from a user terminal;
a searching unit configured to search for the sign image which is mapped to the character information included in the image search request and stored; and
a transmitting unit configured to transmit the searched for sign image to the user terminal,
wherein the sign image is formed at a position corresponding to that of an empty space in a character image.

7. The sign image search server of claim 6, wherein the character includes at least one of a Korean character, an English letter, and numerals.

8. The sign image search server of claim 6, further comprising: an analyzing unit configured to extract the character information corresponding to the sign image input from the outside.

9. A sign image search server, comprising:
a storage unit configured to store a plurality of sign images;
a receiving unit configured to receive an image search request including character information from a user terminal;
a searching unit configured to search a sign image corresponding to the character information included in the image search request; and
a transmitting unit configured to transmit the searched for sign image to the user terminal,
wherein the sign image is formed at a position corresponding to that of an empty space in a character image.

10. The sign image search server of claim 9, wherein the character includes at least one of a Korean character, an English letter, and numerals.

11. A method for providing a sign image search service, comprising:
(a) storing, by a sign image search server, a plurality of sign images;
(b) receiving, by the sign image search server, an image search request including a sign image from a user terminal;
(c) searching for, by the sign image search server, a sign image corresponding to the sign image included in the image search request; and
(d) transmitting, by the sign image search server, the searched for sign image to the user terminal,
wherein the sign image is formed at a position corresponding to that of an empty space in a character image.

12. A sign image search server, comprising:
a storage unit configured to store a plurality of sign images;
a receiving unit configured to receive an image search request including a sign image from a user terminal;
a searching unit configured to search a sign image corresponding to the sign image included in the image search request; and
a transmitting unit configured to transmit the searched for sign image by the searching unit to the user terminal,
wherein the sign image is formed at a position corresponding to that of an empty space in a character image.
